(19) Europäisches Patentamt / European Patent Office / Office européen des brevets

(11) **EP 2 636 574 B1**

(12) **EUROPÄISCHE PATENTSCHRIFT**

(45) Veröffentlichungstag und Bekanntmachung des Hinweises auf die Patenterteilung:
**17.06.2020  Patentblatt 2020/25**

(51) Int Cl.:
**B62D 3/12** *(2006.01)*    **F16H 55/28** *(2006.01)*

(21) Anmeldenummer: **13000752.9**

(22) Anmeldetag: **14.02.2013**

(54) **Druckstück mit thermischem Ausgleichselement**

Pressure piece with thermal compensation element

Pièce d'appui dotée d'un élément d'équilibrage thermique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2012  DE 102012003043**

(43) Veröffentlichungstag der Anmeldung:
**11.09.2013  Patentblatt 2013/37**

(73) Patentinhaber:
• **thyssenkrupp Presta AG**
  **9492 Eschen (LI)**
• **thyssenkrupp AG**
  **45143 Essen (DE)**

(72) Erfinder:
• **Steck, Philippe**
  **3123 Belp (CH)**
• **Werner, Sebastian**
  **81669 München (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
DE-A1-102004 053 462     US-A1- 2010 024 583
US-A1- 2011 193 331

**Beschreibung**

Die Erfindung betrifft eine Zahnstangenlenkung nach dem Oberbegriff des unabhängigen Anspruchs 1.

Üblicherweise werden die vorstehend genannten Zahnstangenlenkungen in Kraftfahrzeugen eingesetzt. Eben solche Zahnstangenlenkungen, bei denen ein über ein Lenkrad und eine Lenkwelle betätigtes Ritzel mit einem Zahnsegment einer linear beweglichen Zahnstange zur Einstellung des Lenkwinkels von gelenkten Rädern eines Fahrzeugs kämmt, sind seit langem bekannt. Im Betrieb sollen das Ritzel und die Zahnstange spielfrei in Eingriff miteinander stehen.

Der spielfreie Eingriff wird üblicherweise über ein Druckstück bewirkt, dass von der dem Ritzel gegenüber liegenden Seite her die Zahnstange gegen das Ritzel drängt. Das Druckstück ist mittels einer Feder vorgespannt und kann gegen den Druck der Feder einen gewissen Hub ausführen, der im Bereich von 0,01 bis zu 0,6 Millimeter liegt. Die Einstellung der Vorspannung und des Hubs erfolgt über eine Stellschraube, die mit einem Gewinde in dem Gehäuse der Lenkung axial verstellbar ist.

Ein immer wieder auftretender Nachteil ist indes ein Axialspiel des Druckstücks, das durch Temperaturschwankungen nicht konstant ist. Dadurch kann die Zahnstange nicht präzise gegen das Ritzel gedrängt werden. Aus dem Dokument JP 10217985 A ist eine Zahnstangenlenkung mit einem Gehäuse, in dem eine Zahnstange verschieblich gelagert ist, bekannt. In dem Gehäuse ist eine Druckstückbohrung vorgesehen, die quer zu der Zahnstange verläuft und in der ein Druckstück angeordnet ist, das mittels einer Stellschraube gegen die Zahnstange gedrängt wird. Die Zahnstangenlenkung weist ein hülsenförmiges Dämpfungsmittel mit einer Schulter auf, wobei die Schulter zwischen einer Stellschraube und dem Druckstück angeordnet ist, und wobei das Druckstück so bemessen ist, dass ein Spalt zwischen dem Dämpfungsmittel und dem Druckstück vorliegt. Der Spalt definiert die Bewegungsfreiheit des Druckstücks in axialer Richtung. Durch die dämpfenden Eigenschaften des Dämpfungsmittels wird das Entstehen von unerwünschten Geräuschen beim Anschlagen des Druckstücks auf die Stellschraube verhindert. Das Dämpfungsmittel besteht aus Kunstharz mit einem hohen Wärmeausdehnungskoeffizient, wobei der Wärmeausdehnungskoeffizient größer ist als der des Gehäuses. Um eine Geräuschreduzierung unabhängig von der Temperatur zu erreichen, ist die äußere Struktur der Hülse mit konkaven Einschnitten versehen, so dass der Spalt klein gehalten werden kann. Ziel dieser Anordnung ist es, insbesondere die Geräuschentstehung durch das Radialspiel zu minimieren, wobei die Schulter der Hülse den Anschlag in axialer Richtung zusätzlich dämpft. Eine thermische Kompensation mit dem Ziel eines temperaturunabhängigen, konstanten Axialspiels ist nicht offenbart. Es ist auch nicht beschrieben, dass das Axialspiel durch ein ringförmiges thermisches Ausgleichselement angepasst wird.

Das Dokument US 6,041,885 offenbart ein thermisches Ausgleichselement, welches als geschlossenes Gleitlager eine Zahnstange in einem Gehäuse lagert. Ein Zusammenhang mit dem Druckstückspiel wird in diesem Dokument nicht dargestellt. DE 10 2004 053462 A1 beschreibt eine Zahnstangenlenkung gemäß dem Oberbegriff des Anspruchs 1.

Es ist deshalb eine Aufgabe der vorliegenden Erfindung die eingangs genannte Zahnstangenlenkung zu verbessern und eine Möglichkeit für einen konstanten Eingriff der Zahnstange mit dem Ritzel zu gewährleisten.

Eine Vorrichtung zur Lösung dieser Aufgabe weist die Merkmale des Anspruchs 1 auf. Danach wird eine Zahnstangenlenkung für ein Kraftfahrzeug vorgeschlagen, mit einem Gehäuse, in dem eine Zahnstange verschieblich gelagert ist, wobei in dem Gehäuse eine Bohrung vorgesehen ist, die quer zu der Zahnstange verläuft und ein in der Bohrung angeordnetes Druckstück, das mittels einer Stellschraube gegen die Zahnstange gedrängt wird, und wobei in der Bohrung ein ringförmiges thermisches Ausgleichselement zum Ausgleich eines Axialspiels des Druckstücks angeordnet ist. Das Ausgleichelement soll den eingestellten Axialspielwert gewährleisten, auch wenn die Zahnstangenlenkung thermisch unterschiedlichen Bedingungen ausgesetzt ist. Das Ausgleichselement kann also einer thermischen Verformung des Druckstücks entgegenwirken und über den im Betrieb auftretenden Temperaturbereich sowohl ein Klappern bei zu großem Spiel als auch ein Klemmen bei zu geringem Spiel verhindern. Der kompensierte Temperaturbereich kann dabei z.B. zwischen -20°C und +60°C liegen. Dabei ist aufgrund des verwendeten Ausgleichselements das eingestellte Axialspiel des Druckstücks über einen spezifischen Temperaturbereich im Wesentlichen konstant. Die ringförmige Ausführung des Ausgleichselements erlaubt es, das Druckstück in vorteilhafter Weise unmittelbar in der Druckstückbohrung zu führen, was eine besonders präzise Führung ermöglicht und die Geräuschentwicklung in diesem Bereich weiter verringert.

Das Ausgleichselement kann somit ein einwandfreies Funktionieren des Druckstücks gewährleisten, wodurch insbesondere auch der Kontakt zwischen der Zahnstange und dem Ritzel auf einem gleichbleibenden Niveau gehalten werden kann.

Die erfinderische Lösung ist auch grundsätzlich auf Wellen- oder Spindelanordnungen einsetzbar, bei denen ebenfalls ein Druckstück auf die Welle bzw. die Spindel gedrückt wird.

Weiterhin ist vorteilhaft vorgesehen, wenn eine Abmessung des Ausgleichselements wenigstens abhängig von dem Druckstück und der Bohrung ist, insbesondere die Abmessungen der Bauteile korrelieren. Ein nicht unwesentlicher Bestandteil der Erfindung betrifft die Abmessungen der einzelnen Bauteile der Anordnung, die für die Konstanz des Axialspiels aufeinander abgestimmt sein sollten. Es hat sich nämlich gezeigt, dass bei beliebiger Dimensionierung der Bauteile das Spiel ausgeprägter ist, als wenn bestimmte Verhältnisse der einzelnen Bauteile berücksichtigt werden.

Gemäß einer bevorzugten Weiterbildung der Erfindung kann deshalb vorgesehen sein, dass eine Höhe des Ausgleichselements abhängig von einer Höhe des Druckstücks ist. Insbesondere die beiden in der Bohrung angeordneten Bauteile haben einen Einfluss auf die Konstanz des Spiels, weshalb die Abmessungen bei einer thermischen Heterogenität entscheidend für das eingestellte Spiel sein können. Ebenso kann aber auch ein Durchmesser Einfluss ausüben.

Eine weitere Ausführungsform kann vorsehen, dass die Korrelation der Bauteile wenigstens abhängig von einem Materialwert, insbesondere einem Temperaturausdehnungskoeffizienten, des jeweiligen Bauteils ist. Die Zahnstangenlenkung wird unterschiedlichen Temperaturen ausgesetzt, wodurch sich die Bauteile verformen können. Hierüber gibt der Temperaturausdehnungskoeffizient Auskunft, wie groß beispielsweise eine Längenänderung für ein Material ist. Bei der Zahnstangenlenkung werden bei unterschiedlichen Bauteilen auch unterschiedliche Materialen eingesetzt, weshalb diese sich auch unterschiedlich stark ausdehnen können. Mit dem Ausgleichselement soll aber dieser unterschiedlich starken Verformung entgegengewirkt werden, vorzugsweise diese durch das Ausgleichselement kompensiert werden.

Gemäß einer besonders bevorzugten Ausführungsform der Erfindung kann die Höhe des Ausgleichselements nach der Formel

$$L_{Kst} = \frac{L_{Dst}(\alpha_{Dst} - \alpha_{Alu})}{(\alpha_{Alu} - \alpha_{Kst})}$$

berechnet sein, wobei $L_{Kst}$ die Höhe des Ausgleichselements, $L_{Dst}$ die Höhe des Druckstücks, $\alpha_{Alu}$ der Temperaturausdehnungskoeffizient des Gehäuses, $\alpha_{Dst}$ der Temperaturausdehnungskoeffizient des Druckstücks und $\alpha_{Kst}$ der Temperaturausdehnungskoeffizient des Ausgleichselements ist. Es ist durch diese Formel leicht ersichtlich, dass die Höhe des Ausgleichselemente direkt abhängig ist von den Koeffizienten $\alpha$ der anderen Bauteile. Damit hat man gegenüber dem Stand der Technik den Vorteil, die Größe des Ausgleichselements genau in Abhängigkeit der anderen Bauteile zu berechnen. Andererseits kann man mit dieser Formel die Bauteile aneinander anpassen.

Weiterhin kann vorgesehen sein, wenn eine Länge einer Druckstückführung im Wesentlichen die Summe der Höhe des Druckstücks und der Höhe des Ausgleichselements ist. Da die Höhe des Ausgleichselements im Wesentlich von der Höhe des Druckstücks abhängen kann, kann auch die Länge der Druckstückführung variieren.

Auch kann vorgesehen sein, dass das Ausgleichselement vorzugsweise zwischen dem Druckstück und der Stellschraube angeordnet ist. Das Druckstück ist für gewöhnlich an einem mit der Welle oder der Spindel in Kontakt tretenden Ende spezifisch ausgeführt. So kann beispielsweise das Druckstück an diesem Ende eine Rundung entsprechend der Welle aufweisen. Deshalb ist es vorteilhaft, wenn das Ausgleichselement an einer Stelle in der Bohrung vorgesehen ist, von der der Ausgleich besonders gut auf die anderen Bauteile wirken kann.

Weitere vorteilhafte Ausgestaltungen der vorliegenden Erfindung sind Inhalt der Unteransprüche.

Ein bevorzugtes Ausführungsbeispiel der Erfindung wird nachfolgend anhand der Zeichnung näher erläutert. In dieser zeigen:

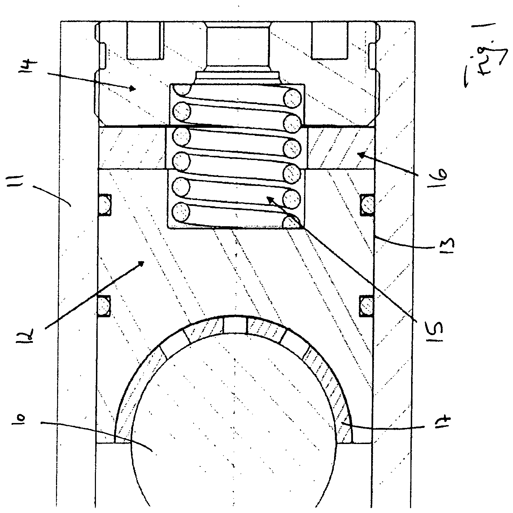

Fig. 1     eine Schnittansicht einer erfindungsgemäßen Zahnstangenlenkung.

In der Fig. 1 ist ein Bereich einer Druckstückbohrung gezeigt, die in einer Zahnstangenlenkung angeordnet ist. Ebenso kann der dargestellte Bereich auch schlicht Teil einer Wellen- bzw. Spindelanordnung sein. Die Zahnstangenlenkung weist eine Zahnstange 10 auf, die mit einem nicht dargestellten Ritzel kämmt und in einem Gehäuse 11 angeordnet ist. Damit die Zahnstange 10 in dem dargestellten Gehäuse 11 spielfrei drehen kann bzw. präzise mit dem Ritzel in Eingriff steht, ist ein Druckstück 12 vorgesehen, das gegen die Zahnstange 10 gedrängt ist. Hierfür ist das Druckstück 12 quer zu einer Axialrichtung der Zahnstange 10 positioniert, wodurch in radialer Richtung der Zahnstange 10 ein gewisser Spielwert einstellbar ist.

Das Druckstück 12 ist in einer Bohrung 13 angeordnet, die einerseits in einer Führung für die Zahnstange 10 endet und andererseits ein offenes Ende aufweist, durch das zumindest das Druckstück 12 in die Bohrung 13 einführbar ist. Zusätzlich wird das Druckstück in der Bohrung 13 mit einer Stellschraube 14 gesichert. Die Sicherung gilt einerseits der tatsächlichen Sicherung, damit das Druckstück 12 nicht ungewollt aus der Bohrung 13 herausfallen kann. Andererseits dient die Sicherung auch der Einstellung eines Axialspielwerts des Druckstücks 12, wodurch das radiale Spiel der Zahnstange 10 spezifiziert wird. Weiterhin ist eine Feder 15 vorgesehen, durch die das Druckstück 10 gegen die Stellschraube 14 abgestützt ist.

Eine Oberfläche des Druckstücks 12, die zur Zahnstange 10 gerichtet ist, weist eine im Wesentlichen 180°-Krümmung auf. Das Druckstück 12 umschließt die Zahnstange 10 zumindest zum Teil, wobei zusätzlich ein Zwischenglied 17 zwischen der Zahnstange 10 und dem Druckstück 12 vorgesehen sein kann, wie es in Fig. 1 angedeutet ist.

Weiterhin ist ein thermisches Ausgleichselement 16 vorgesehen, das zwischen dem Druckstück 12 und der Stellschraube 14 angeordnet ist. Das Ausgleichselement 16 weist eine Durchbrechung auf, durch die die Feder 15 hindurch tritt. Das Ausgleichselement 16 ist als eine Ringscheibe ausgebildet, wobei in alternativen Ausführungsformen, wenn beispielsweise die Spindelanordnung keine Feder aufweist, das Ausgleichselement 16 auch in Form einer Scheibe ausgebildet sein kann.

Eine Höhe $L_{Kst}$ des Ausgleichelements ist nach der Formel

$$\text{(F1)} \quad L_{Kst} = \frac{L_{Dst}\left(\alpha_{Dst} - \alpha_{Alu}\right)}{\left(\alpha_{Alu} - \alpha_{Kst}\right)}$$

berechnet. Darin bedeutet $L_{Kst}$ die Höhe des Ausgleichselements 16, $L_{Dst}$ die Höhe des Druckstücks 12, $\alpha_{Alu}$ der Temperaturausdehnungskoeffizient des Gehäuses 11, $\alpha_{Dst}$ der Temperaturausdehnungskoeffizient des Druckstücks 12 und $\alpha_{Kst}$ der Temperaturausdehnungskoeffizient des Ausgleichselements 16.

Mit der Formel (F1) kann je nach Koeffizient $\alpha$ des jeweiligen Bauteils die Höhe des Ausgleichselements 16 berechnet werden, wobei zusätzlich auch die Höhe des Druckstücks 12 bekannt sein muss. Insofern ist die Höhe des Ausgleichselements 16 auch abhängig von der Höhe des Druckstücks 12 bzw. wird an diese angepasst. Aufgrund der Abhängigkeit der Höhe des Ausgleichselements von den Koeffizienten der anderen Bauteile können bei unterschiedlichen Materialen und gleicher Druckstückhöhe eine andere Ausgleichselementhöhe berechnet werden.

Nachstehend werden zwei Berechnungen beschrieben, bei denen bei zumindest ähnlichen Temperaturausdehnungskoeffizienten unterschiedliche Bauteilhöhen berechnet wurden.

Bei der ersten Berechnung ist das Gehäuse 11 aus Aluminium gefertigt, weshalb der Koeffizient $\alpha_{Alu}$ des Gehäuses 24 ist. Das Druckstück ist aus Polyetheretherketon (PEEK) gebildet, das einen Temperaturausdehnungskoeffizienten $\alpha_{Dst}$ 17 aufweist. Das thermische Ausgleichselement selbst ist aus Zink gefertigt, welches einen Temperaturausdehnungskoeffizienten $\alpha_{Kst}$ 26 aufweist.

Nach der Berechnung mit der Formel (F1) erhält man bei einer angenommen Druckstückhöhe von 30 mm eine Ausgleichselementhöhe von 105 mm. Die notwendige Länge der Druckstückführung wäre somit mit 135 mm anzusetzen.

Bei einem anderen Berechnungsbeispiel, bei den das Druckstück 12 aus Zink gefertigt ist und das Ausgleichselement aus Stahl, ergeben sich niedrigere Abmessungen. Der Temperaturausdehnungskoeffizienten $\alpha_{Dst}$ ist bei Zink 26 und bei Stahl $\alpha_{Kst}$ 12. Somit ergibt sich eine Höhe des Ausgleichselements 16 von nur 5 mm, bei gleicher Druckstückhöhe von 30 mm wie im ersten Berechnungsbeispiel.

Durch die verschiedenen Temperaturausdehnungskoeffizienten der einzelnen Bauteile bleibt das eingestellte Spiel des Druckstücks 12 über den gesamten Temperaturbereich, dem die Zahnstangenlenkung ausgesetzt sein kann, annähernd konstant. Je nach Gehäuseabmessung ist ein entsprechendes Material für das Ausgleichselement 16 zu wählen, da, wie oben gezeigt, ganz unterschiedliche Höhen erforderlich sein können, wenn die Höhe des Druckstücks 12 vorgegeben ist.

Das thermische Ausgleichselement 16 kann somit aus unterschiedlichen Materialen gebildet sein, wobei diese in Abhängigkeit der Bauteilhöhe und des Materials des Druckstücks zu wählen ist. Neben Zink oder Stahl, wie in den Beispielberechnungen gewählt, können auch thermoplastische Kunststoffe oder andere Metalle gewählt werden, je nachdem, welches der Materialen für die gewünschte Länge des Ausgleichselements 16 zweckmäßig ist. Es kann aber auch das Material des Druckstücks 12 an das Material des Ausgleichselements 16 angepasst werden, je nachdem wie der Temperaturausdehnungskoeffizient ist.

Zusammenfassend betrifft die Erfindung deshalb eine Zahnstangenlenkung bzw. eine Einrichtung zum Ausgleich eines Radialspiels einer Wellen- bzw. Spindelanordnung für Lenkungen in Kraftfahrzeugen. Zum Ausgleich thermischer Verformungen wird ein Ausgleichselement einem Druckstück zugeordnet, welches mittels einer Stellschraube gegen die Zahnstange oder Welle bzw. Spindel gedrängt ist.

## Patentansprüche

1. Zahnstangenlenkung für ein Kraftfahrzeug, mit einem Gehäuse (11), in dem eine Zahnstange verschieblich gelagert ist, wobei in dem Gehäuse (11) eine Bohrung (13) vorgesehen ist, die quer zu der Zahnstange (10) verläuft und ein in der Bohrung angeordnetes Druckstück (12), das mittels einer Stellschraube (14) gegen die Zahnstange (10) gedrängt wird,
wobei in der Bohrung (13) zwischen dem Druckstück (12) und der Stellschraube (14) ein ringförmiges thermisches Ausgleichselement (16) zum Ausgleich eines Axialspiels des Druckstücks (12) angeordnet ist, **dadurch gekennzeichnet dass** das Ausgleichselement (16) als eine Ringscheibe ausgebildet ist und derart bemessen ist, dass das eingestellte Axialspiel des Druckstücks (12) über einen vorbestimmten Temperaturbereich konstant ist.

2. Zahnstangenlenkung nach Anspruch 1, **dadurch gekennzeichnet, dass** eine Abmessung des Ausgleichselements (16) wenigstens abhängig von dem Druckstück (12) und der Bohrung (13) ist, insbesondere die Abmessungen der Bauteile (12, 13, 16) korrelieren.

3. Zahnstangenlenkung nach einem der vorhergehenden Ansprüche,
**dadurch gekennzeichnet, dass** eine Höhe des Ausgleichselements (16) abhängig von einer Höhe des Druckstücks (12) ist.

**4.** Zahnstangenlenkung nach einem der vorhergehenden Ansprüche,
**dadurch gekennzeichnet, dass** die Korrelation der Bauteile (12, 13, 16) wenigstens abhängig von einem Materialwert, insbesondere einem Temperaturausdehnungskoeffizienten, des jeweiligen Bauteils (12, 13, 16) ist.

**5.** Zahnstangenlenkung nach einem der vorhergehenden Ansprüche,
**dadurch gekennzeichnet, dass** die Höhe des Ausgleichselements (16) nach der Formel

$$L_{Kst} = \frac{L_{Dst}(\alpha_{Dst} - \alpha_{Alu})}{(\alpha_{Alu} - \alpha_{Kst})}$$

berechnet ist, wobei $L_{Kst}$ die Höhe des Ausgleichselements (16) ist, $L_{Dst}$ die Höhe des Druckstücks (12) ist, $\alpha_{Alu}$ der Temperaturausdehnungskoeffizient des Gehäuses (11), $\alpha_{Dst}$ der Temperaturausdehnungskoeffizient des Druckstücks (12) und $\alpha_{Kst}$ der Temperaturausdehnungskoeffizient des Ausgleichselements (16) ist.

**6.** Zahnstangenlenkung nach einem der vorhergehenden Ansprüche,
**dadurch gekennzeichnet, dass** eine Druckstückführung vorgesehen ist, deren Länge im Wesentlichen die Summe der Höhe des Druckstücks (12) und der Höhe des Ausgleichselements (16) ist.

**Claims**

**1.** Rack and pinion steering system for a motor vehicle, with a housing (11), in which a rack is displaceably mounted, wherein in the housing (11) a borehole (13) is provided, which runs transverse to the rack (10) and a pressure piece (12) arranged in the borehole which is pushed against the rack (10) by means of an adjustment screw (14), wherein in the borehole (13) between the pressure piece (12) and the adjustment screw (14) a ring-shaped thermal compensation element (16) is arranged to compensate an axial clearance of the pressure piece (12), **characterised in that** the compensation element (16) is formed as a ring disc and is dimensioned such that the set axial clearance of the pressure piece (12) is constant over a predetermined temperature range.

**2.** Rack and pinion steering system according to claim 1, **characterised in that** a dimension of the compensation element (16) is at least dependent on the pressure piece (12) and the borehole (13), in particular the dimensions of the components (12, 13, 16) correlate.

**3.** Rack and pinion steering system according to any one of the preceding claims, **characterised in that** a height of the compensation element (16) is dependent on a height of the pressure piece (12).

**4.** Rack and pinion steering system according to any one of the preceding claims, **characterised in that** the correlation of the components (12, 13, 16) is at least dependent on a material value, in particular a thermal expansion coefficient, of the respective component (12, 13, 16).

**5.** Rack and pinion steering system according to any one of the preceding claims, **characterised in that** the height of the compensation element (16) is calculated according to the formula

$$L_{Kst} = \frac{L_{Dst}(\alpha_{Dst} - \alpha_{Alu})}{(\alpha_{Alu} - \alpha_{Kst})}$$

wherein $L_{kst}$ is the height of the compensation element (16), Lost is the height of the pressure piece (12), $\alpha_{Alu}$ is the thermal expansion coefficient of the housing (11), $\alpha_{Dst}$ is the thermal expansion coefficient of the pressure piece (12) and $\alpha_{Kst}$ is the thermal expansion coefficient of the compensation element (16).

**6.** Rack and pinion steering system according to any one of the preceding claims, **characterised in that** a pressure piece guide is provided, whose length is substantially the sum of the height of the pressure piece (12) and the height of the compensation element (16).

**Revendications**

**1.** Mécanisme de direction à crémaillère pour un véhicule automobile, avec un boîtier (11), dans lequel est logée de manière déplaçable une crémaillère, un alésage (13) étant prévu dans le boîtier (11) qui passe transversalement par rapport à la crémaillère (10) et une pièce d'appui (12) étant agencée dans l'alésage, laquelle est poussée par l'intermédiaire d'une vis de réglage (14) contre la crémaillère (10), un élément de compensation (16) thermique annulaire, pour l'équilibrage d'un jeu axial de la pièce d'appui (12), étant agencé dans l'alésage (13) entre la pièce d'appui (12) et la vis de réglage (14), **caractérisé en ce que** l'élément de compensation (16) est conçu en tant que rondelle annulaire et est dimensionné de telle manière que le jeu axial réglé de la pièce d'appui (12) est constant dans une plage de température prédéterminée.

2. Mécanisme de direction à crémaillère selon la revendication 1, **caractérisé en ce qu'**une dimension de l'élément de compensation (16) dépend au moins de la pièce d'appui (12) et de l'alésage (13), notamment les dimensions des composants (12, 13, 16) se corrèlent.

3. Mécanisme de direction à crémaillère selon l'une des revendications précédentes, **caractérisé en ce que** la hauteur de l'élément de compensation (16) dépend d'une hauteur de la pièce d'appui (12).

4. Mécanisme de direction à crémaillère selon l'une des revendications précédentes, **caractérisé en ce que** la corrélation des composants (12, 13, 16) dépend au moins d'une valeur matérielle, notamment d'un coefficient de dilatation thermique, du composant (12, 13, 16) respectif.

5. Mécanisme de direction à crémaillère selon l'une des revendications précédentes, **caractérisé en ce que** la hauteur de l'élément de compensation (16) est calculée selon la formule

$$L_{Kst} = \frac{L_{Dst}\left(\alpha_{Dst} - \alpha_{Alu}\right)}{\left(\alpha_{Alu} - \alpha_{Kst}\right)}$$

$L_{Kst}$ étant la hauteur de l'élément de compensation (16), $L_{Dst}$ étant la hauteur de l'élément d'appui (12), $\alpha_{Alu}$ étant le coefficient de dilatation thermique du boîtier (11), $\alpha_{Dst}$ étant le coefficient de dilatation thermique de l'élément d'appui (12) et $\alpha_{Kst}$ étant le coefficient de dilatation thermique de l'élément de compensation (16).

6. Mécanisme de direction à crémaillère selon l'une des revendications précédentes, **caractérisé en ce que** l'on prévoit un guidage de pièce d'appui, dont la longueur est essentiellement la somme de la hauteur de la pièce d'appui (12) et de la hauteur de l'élément de compensation (16).

EP 2 636 574 B1

Fig. 2

7

**IN DER BESCHREIBUNG AUFGEFÜHRTE DOKUMENTE**

**In der Beschreibung aufgeführte Patentdokumente**

- JP 10217985 A
- US 6041885 A
- DE 102004053462 A1